# EUROPÄISCHE PATENTSCHRIFT

(11) **EP 2 102 794 B1**
(45) Veröffentlichungstag und Bekanntmachung des Hinweises auf die Patenterteilung: **04.04.2012**
(21) Anmeldenummer: 07856423.4
(22) Anmeldetag: 06.12.2007
(51) Int. Cl.: G06K 9/62

(54) **PORTABLER DATENTRÄGER ZUR BIOMETRISCHEN BENUTZERERKENNUNG**
PORTABLE DATA STORAGE MEDIUM FOR BIOMETRIC USER IDENTIFICATION
SUPPORT DE DONNÉES PORTABLE POUR LA DÉTECTION BIOMÉTRIQUE D'UTILISATEURS

(30) Priorität: 08.12.2006 DE 102006057948
(43) Veröffentlichungstag der Anmeldung: 23.09.2009
(73) Patentinhaber: Giesecke & Devrient GmbH, 81677 München (DE)
(72) Erfinder: TAGSCHERER, Michael, 82131 Gauting (DE)
(86) Internationale Anmeldenummer: PCT/EP2007/010618
(87) Internationale Veröffentlichungsnummer: WO 2008/068022

(56) Entgegenhaltungen:
- WO-A-91/08555
- WO-A1-98/50880
- US-A- 4 724 542
- TAGSCHERER M ET AL.: "Kontinuierliches Lernen mit Neuronalen Netzen" PROC. 9. WORKSHOP FUZZY SYSTEME. VDI/VDE GMA, FACHAUSSCHUSS 5.14 COMPUTATIONAL INTELLIGENCE, 1999, Seiten 1-14, XP002474110
- BECHELLI L ET AL: "Biometrics authentication with smartcard" TECHNICAL REPORT ISTITUTO DI INFORMATICA E TELEMATICA, Nr. 8/2002, März 2002 (2002-03), Seiten 1-12, XP002270622
- CHEN S ET AL: "Recognizing Partially Occluded, Expression Variant Faces From Single Training Image per Person With SOM and Soft kNN Ensemble" IEEE TRANSACTIONS ON NEURAL NETWORKS, IEEE SERVICE CENTER, PISCATAWAY, NJ, US, Bd. 16, Nr. 4, Juli 2005 (2005-07), Seiten 875-886, XP011135667 ISSN: 1045-9227

## Beschreibung

Die vorliegende Erfindung betrifft ein Verfahren zum Bereitstellen eines Referenzmodells auf einem portablen Datenträger zur biometrischen Erkennung eines Benutzers des Datenträgers anhand dieses Referenzmodells sowie einen derartigen Datenträger.

Portable Datenträger, wie zum Beispiel Chipkarten, Smart Cards, Mobilfunkkarten, sichere Multimediakarten und sonstige mit einer Rechenkapazität ausgestattete tragbare Geräte, werden vielfach für Sicherheitsanwendungen eingesetzt, bei denen sich ein Benutzer des Datenträgers gegenüber einer externen Stelle authentisiert. Dies ist zum Beispiel bei Zugangskontroll- oder Identifizierungssystemen der Fall, die biometrische Vergleichsdaten des Benutzers erheben und zur Authentisierung des Benutzers mit biometrischen Referenzdaten vergleichen, die zweifelsfrei von dem Benutzer stammen. Üblicherweise wird hierbei ein Vergleichsvektor gebildet, der bestimmte Merkmale der biometrischen Vergleichsdaten abbildet, und mit einem entsprechenden biometrischen Referenzvektor verglichen, den der Benutzer auf den Datenträger mit sich führt. Das Ähnlichkeitskriterium der Vergleichsoperation weist hierbei zumeist eine gewisse Toleranz auf, um möglichst gute Erkennungsraten zu erreichen.

Jedoch wird bei einem Vergleich mit einem statischen Referenzvektor eine allmählich auftretende Veränderung der gemessenen biometrischen Eigenschaft des Benutzers nicht berücksichtigt, die sich z.B. aus Alterungsprozessen, physischen und psychischen Zuständen des Benutzers, Erkrankungen und dergleichen ergeben kann. Ebenso kann die Verwendung eines einzigen Referenzvektors nicht die normale Komplexität eines biometrischen Merkmalsraums erfassen, da z.B. nicht-lineare Abhängigkeiten zwischen zu akzeptierenden und zurückzuweisenden Merkmalsvektoren nicht modelliert werden können.

Um trotz dieser Nachteile dennoch akzeptable Erkennungsraten zu erzielen, wird häufig kontextabhängiges (d.h. benutzerabhängiges) Wissen über den konkreten Merkmalsraum in die Vergleichs- bzw. Erkennungsoperation (den so genannte Klassifikator) integriert, was zwar zu besseren Erkennungsraten führen kann, die Klassifikation aber andererseits rechenintensiv und unflexibel macht. Deshalb können herkömmliche Erkennungsverfahren auf einem portablen Datenträger, der nur über eingeschränkte Ressourcen verfügt, häufig nicht die von Sicherheitsanwendungen zu fordernden Erkennungsraten erbringen, da sie aufgrund der genannten Beschränkung und Unflexibilität des Merkmalsvektorvergleichs zumindest nach einiger Zeit zu vermehrten Fehlklassifikationen führen.

In diesem Zusammenhang offenbart die DE 10 2004 043 875 A1 eine Möglichkeit, die natürlichen Veränderungen von biometrischen Merkmalen zu kompensieren, indem diese über Adaptionswerte bei der Auswertung von biometrischen Merkmalen, z.B. durch deren Normierung, berücksichtigt werden. Dadurch werden letztlich Parameter der Merkmalserkennung beeinflusst, zum Beispiel die Erkennungs-/Zulassungstoleranz des Erkennungsverfahrens oder Parameter der Merkmalssensoren. Demgegenüber schlägt die WO 02/071314 A1 vor, die natürlichen Veränderungen von biometrischen Merkmalen zu berücksichtigen, indem ein erkanntes biometrisches Vergleichsmuster unter bestimmten Bedingungen als Referenzmuster für das nächste zu erkennenden Vergleichsmuster verwendet wird. Schließlich offenbart die WO 2006/069158 A2 ein selbst-adaptives Verfahren zur biometrischen Erkennung, bei dem die jeweils verwendeten biometrischen Referenzdaten in Abhängigkeit von Sicherheitsanforderungen und der biometrischen Datenqualität aus verschiedenen biometrischen Modalitäten mit unterschiedlichen Gewichtungen ausgewählt werden. Dabei können die Referenzdaten kontinuierlich auf eine vorbestimmte Weise durch die jeweils zuletzt geprüften Vergleichsdaten angepasst werden.

Aus der US 4,724,542 ist ein Verfahren zur Unterschriftenerkennung bekannt, nach dem ein Referenzdatensatz adaptiv aktualisiert wird. Der Referenzdatensatz besteht aus einem Haupt-Set von zwei Kernunterschriften, die bei einer Erkennung zunächst geprüft werden, sowie einem Alternativ-Set von vier Alternativunterschriften, die bei einer Erkennung dann geprüft werden, wenn eine nichtausreichende Übereinstimmung mit den Kernunterschriften des Haupt-Sets festgestellt wurde. Ergibt der Vergleich mit den Alternativunterschriften eine Übereinstimmung, wird die am besten übereinstimmende Unterschrift des Alternativsets in den Hauptset übernommen und die neu geleistete Unterschrift anstelle der in den Hauptset übernommenen Unterschrift in den Alternativset eingefügt. Die Zahl der im Hauptset und im Alternativset vorhandenen Unterschriften bleibt stets unverändert. Die Lösung erfordert insbesondere bei hoch angesetzten Ähnlichkeitsschwellwerten ein häufiges Anpassen der Unterschriftensets.

Aus der WO 91/08555 A1 ist ein Verfahren zur Aktualisierung biometrischer Referenzdaten, etwa zur Fingerabdruckerkennung entnehmbar. Bei der Erkennung wird der Nutzer im Falle eines Fehlers eine gewisse Anzahl von Wiederholungsversuchen gewährt. Führt einer der Wiederholungsversuche zum Erfolg, wird der zugehörige Datensatz als neuer Referenzdatensatz übernommen. Das Verfahren eignet sich insbesondere für Trainingszwecke.

Aus dem Papier "Kontinuierliches Lernen mit neuronalen Netzen" von M. Tagscherer und P. Protzel (XP-002474110) ist eine Theorie zur Modellbildung für die Automatisierung technischer Prozesse bekannt, nach der ein bestehendes Modell für einen Prozeß ständig nachtrainiert werden soll. Insbesondere werden zweischichtige hybride Architekturen betrachtet, wobei eine erste Schicht für die Aufteilung eines Eingaberaumes verantwortlich ist und die zweite Schicht mit Hilfe lokaler Modelle die Approximation des betrachteten Prozesses realisiert.

Aus der WO 98/50880 ist ein Verfahren zur Unterschriftsverifikation bekannt, bei dem ein Referenzdatensatz von Unterschriften anhand mindestens eines Eingabedatensatzes durch einen Rechner angepasst wird. Der Referenzdatensatz wird aus den in einem Pufferspeicher gespeicherten Unterschriften gebildet. Bei dem Pufferspeicher kann es sich um einen Ringpuffer handeln, der so lange mit neuen Eingabedatensätzen, d.h. Unterschriften, aufgefüllt wird, bis er voll ist.

Es ist die Aufgabe der vorliegenden Erfindung, eine flexible und effiziente biometrischen Erkennung bereitzustellen, die die natürlichen Veränderungen biometrischer Merkmale zuverlässig kompensiert.

Diese Aufgabe wird erfindungsgemäß durch ein Verfahren sowie einen Datenträger mit den Merkmalen der unabhängigen Ansprüche gelöst. Die davon abhängigen Ansprüche beschreiben vorteilhafte Ausgestaltungen und Weiterbildungen der Erfindung.

Die Erfindung basiert auf der Idee, zur Verifikation eines Vergleichvektors, der aus aktuellen biometrischen Daten eines Benutzers eines portablen Datenträgers gewonnen wurde, nicht nur einen oder wenige Referenzvektoren bereitzustellen, sondern ein veränderliches und anpassbares Referenzmodell, das aus einer Vielzahl von sicher von dem Benutzer stammenden Referenzvektoren gebildet ist. Dabei wird derjenige Bereich eines Merkmalsraums, innerhalb dessen ein biometrischer Vergleichsvektor des Benutzers als von dem Benutzer stammend akzeptiert wird, durch einen Akzeptanzbereich des Referenzmodells gebildet.

Dieses Referenzmodell des Benutzers befindet sich auf einem portablen Datenträger des Benutzers und wird durch einzelne Modellstützstellen definiert, die jeweils aus von dem Benutzer stammenden biometrischen Referenzvektoren gebildet werden. Das Referenzmodell wird dabei schrittweise auf- und ausgebaut, indem es jeweils durch geeignete neue Modellstützstellen ergänzt bzw. verfeinert wird. Eine neue Modellstützstelle wird dann in das Referenzmodell eingefügt, wenn der zugehörige von dem Benutzer stammende Referenzvektor, aus dem die neue Modellstützstelle abgeleitet wird, außerhalb des Akzeptanzbereichs des aktuellen Referenzmodells liegt. In diesem Fall besteht nämlich die Notwendigkeit, eine Korrektur oder Anpassung des gegenwärtigen Referenzmodells vorzunehmen, da der von dem Benutzer stammende Referenzvektor auch aufgrund des Referenzmodells als von Benutzer stammend erkannt werden sollte.

Das erfindungsgemäße Verfahren wird von einem portablen Datenträger mit einem Trainingsmodul und einem Erkennungsmodul umgesetzt, die jeweils als von einem Prozessor des Datenträgers ausführbare Applikationsprogramme ausgestaltet sein können, wobei das Trainingsmodul das Referenzmodell zur biometrischen Erkennung eines Benutzers des Datenträgers durch das Erkennungsmodul erzeugt und in einem Speicher des portablen Datenträgers ablegt. Das Erkennungsmodul prüft dann anhand des in dem Speicher liegenden aktuellen Referenzmodells, ob ein biometrischer Vergleichsvektor innerhalb des aktuellen Akzeptanzbereichs liegt und somit zu akzeptieren ist.

Das erfindungsgemäße Referenzmodell ermöglicht in einer beliebig feinen Weise eine genaue Bestimmung desjenigen Bereichs des Merkmalsraums, der genau solche Vergleichsvektoren repräsentiert, die tatsächlich von dem Benutzer stammen bzw. potentiell von diesem stammen könnten. Das Referenzmodell wird durch Einfügen neuer Modellstützstellen in einem bestimmten lokalen Bereich des Merkmalsraums an sich allmählich verändernde biometrische Eigenschaften des Benutzers angepasst. Durch diese jederzeit mögliche Verfeinerung des Referenzmodells mittels weiterer Modellstützstellen kann die Erkennungsrate trotz zeitlicher Veränderungen der zugrundeliegenden biometrischen Daten beibehalten oder sogar permanent verbessert werden. Das erfindungsgemäße Referenzmodell stellt insofern einen lernenden Klassifikator zur langfristig zuverlässigen biometrischen Erkennung des Benutzers bereit. Außerdem sind erfindungsgemäßes Trainingsverfahren sowie das Referenzmodell selbst besonders zur Implementierung bzw. Nutzung auf einem portablen Datenträger geeignet.

Durch das sukzessive Einfügen neuer Modellstützstellen wird das Referenzmodell im Merkmalsraum abschnittsweise durch lokale Modelle definiert, die jeweils aus zumindest einer Modellstützstelle gebildet sind. Die Definition einzelner lokaler Modelle ermöglicht eine einfache und effiziente Weise der Definition des Gesamtreferenzmodells, da jedes lokale Modell durch wenige Parameter ausreichend genau definiert werden kann. Diese generischen Parameter können von dem Trainingmodul in einer effizienten Datenstruktur in einem Speicher des Datenträgers veränderlich abgelegt werden, auf den auch das Erkennungsmodul zugreifen kann.

Jedes lokale Modell ist mit einem Gültigkeitsbereich ausgestattet, der jeweils angibt, welches lokale Modell von einem Erkennungsmodul zur Erkennung eines bestimmten biometrischen Vergleichsvektors heranzuziehen ist. Neben dem Gültigkeitsbereich ordnet das Trainingsmodul jedem lokalen Modell einen Toleranzbereich zu, wobei die Toleranzbereiche aller lokalen Modelle den Akzeptanzbereich des Referenzmodells bilden. Die (geometrischen) Parameter eines lokalen Modells mit seinem Gültigkeits- und Toleranzbereich können als n-dimensionale Punkte im n-dimensionalen Merkmalsraum bzw. durch Interpolationen zwischen diesen Punkten im Speicher des Datenträgers abgelegt werden.

Das Erkennungsmodul, das eine biometrische Erkennung auf Basis eines derartigen Referenzmodells durchführt, akzeptiert einen über die Kommunikationsschnittstelle des Datenträgers empfangenen biometrischen Vergleichsvektor als von dem Benutzer stammend, wenn der Vergleichsvektor innerhalb des Toleranzbereichs desjenigen lokalen Modells liegt, in dessen Gültigkeitsbereich der Vergleichvektor fällt. Zur Bestimmung eines Gültigkeitsbereichs eines lokalen Modells bildet das Trainingsmodul für jede Modellstützstelle eine Wahrscheinlichkeitsverteilung, deren Breite jeweils abhängig ist von der Lage und Breite der Wahrscheinlichkeitsverteilungen benachbarter Modellstützstellen. Eine Wahrscheinlichkeitsverteilung einer Modellstützstelle ist dann schmal, wenn in ihrer Nachbarschaft viele andere Modellstützstellen existieren, und entsprechend breit, wenn in ihrer Nachbarschaft keine oder wenige andere Modellstützstellen liegen. Der Gültigkeitsbereich eines lokalen Modells ist der Gesamtbereich der Wahrscheinlichkeitsverteilungen aller Modellstützstellen, die das betreffende lokale Modell bilden.

Anhand der Wahrscheinlichkeitsverteilungen ermittelt das Erkennungsmodul eine Erkennungsqualität, d.h. die Wahrscheinlichkeit, mit der das Erkennungsergebnis korrekt ist. Da eine Wahrscheinlichkeitsverteilung jeweils an und in der Nähe der zugehörigen Modellstützstelle hohe Wahrscheinlichkeitswerte aufweist und mit größerem Abstand zu dem betreffenden Modellstützpunkt geringere Wahrscheinlichkeitswerte annimmt, ordnet das Erkennungsmodul einem akzeptierten Vergleichsvektor eine hohe Erkennungsqualität zu, wenn er möglichst nahe bei einer Modellstützstelle liegt. Die Wahrscheinlichkeitsverteilung kann zumindest qualitativ eine Normalverteilung sein.

Bei Einfügen eines neuen Modellstützpunkts werden dessen Wahrscheinlichkeitsverteilung sowie die Wahrscheinlichkeitsverteilungen der benachbarten Modellstützstellen in ihrer Breite angepasst und aufeinander abgestimmt. Dadurch kann sich auch eine Veränderung der Gültigkeitsbereiche der betroffenen lokalen Modelle ergeben. Falls die Anzahl der Modellstützstellen, die ein lokales Modell bilden, eine in dem Speicher des Datenträgers abgelegte vorgegebene Maximalzahl überschreitet, kann das Trainingsmodul ein Einfügen weiterer Modellstützstellen in das betreffende lokale Modell unterlassen, da das lokale Modell bereits ausreichend fein definiert ist und eine nennenswerte Verbesserung der Erkennungsrate nicht zu erwarten ist. Alternativ oder zusätzlich kann ein solches lokales Modell von dem Trainingsmodul in zwei neue lokale Modelle aufgespaltet werden, um eine bessere Adaptionsfähigkeit des Referenzmodells an die lokalen Verhältnis in dem Merkmalsraum zu erreichen.

Das Trainingsmodul kann die Modellstützstellen auf unterschiedliche Weise aus den zugehörigen biometrischen Vergleichsvektoren berechnen, vorzugsweise wird jedoch als eine neu einzuführende Modellstützstelle der zugehörige biometrische Referenzvektor des Benutzers selbst verwendet. Sämtliche Informationen, die das Referenzmodell betreffen, werden von dem Trainingsmodul in einem Speicher des Datenträgers abgelegt, vorzugsweise in einer effizienten Datenstruktur, die die Struktur eines aus lokalen Modellen bestehenden Referenzmodells berücksichtigt.

Prinzipiell kann das erfindungsgemäße Verfahren zum Aufbau eines Referenzmodells sowohl in einer separaten Trainingsphase angewendet werden, in der das Referenzmodell initial auf Basis einer Vielzahl von Referenzvektoren generiert wird, die von einer autorisierten Stelle als solche bereitgestellt werden. Andererseits ist es auch möglich, dass das Trainingsmodul ein bestehendes und bereits von dem Erkennungsmodul verwendetes Referenzmodell während einer Anwendungsphase anpasst, sofern eine autorisierte Stelle biometrische Referenzvektoren bereitstellt. Die autorisierte Stelle kann z.B. eine Behörde oder dergleichen sein, die dem Trainingsmodul über ein Terminal, mit dem der portable Datenträger verbunden ist, Referenzvektoren zur Verfügung stellt.

Falls das Trainingsmodul das gegenwärtige Referenzmodell aufgrund eines entsprechenden Signals von einem externen Terminal mit einem neuen Referenzvektor verfeinern soll, wird das Erkennungsmodul zunächst angewiesen, zu ermitteln, ob der entsprechende Referenzvektor auf der Basis des gegenwärtigen Referenzmodells nicht ohnehin als von dem Benutzer stammend akzeptiert wird. Falls der Referenzvektor jedoch fälschlicherweise zurückgewiesen wird, übergibt das Erkennungsmodul diese Information dem Trainingsmodul, wobei das Terminal der autorisierten Stelle dem Trainingsmodul zugleich ein Signal übermittelt, wonach es sich bei diesem Vektor um einen von dem Benutzer stammenden Referenzvektor handelt. Daraufhin fügt das Trainingsmodul den biometrischen Vergleichsvektor in Form einer neuen Modellstützstelle oder sogar als neues lokales Modell in das bestehende Referenzmodell ein.

Das erfindungsgemäße Verfahren wird vorzugsweise auf einem portablen Datenträger, wie zum Beispiel einer Chipkarte, Smart Card und dergleichen umgesetzt, die auf einen Benutzer personalisiert ist. Somit dient ein erfindungsgemäßer portabler Datenträger als individuelle und eindeutige Identifikationskarte des Benutzers, wobei dessen biometrische Identität in Form des adaptiven Referenzmodells auf der Identifikationskarte abgespeichert ist, möglichst in einem besonders gesicherten Speicher oder Speicherbereich.

Weitere Merkmale der Erfindung ergeben sich aus der folgenden Beschreibung verschiedener erfindungsgemäßer Ausführungsbeispiele und Ausführungsalternativen. Es wird auf die folgenden Figuren verwiesen, welche zeigen:
- Fig. 1: einen erfindungsgemäßen portablen Datenträger;
- Fig. 2: einen schematischen Ablauf eines Trainings- und Erkennungsprozesses;
- Fig. 3: eine schematische Darstellung eines adaptiven Trainingsprozesses des Trainingsmoduls während einer Anwendungsphase des Erkennungsmoduls;
- Fig. 4: eine Illustration einer abschnittsweisen Definition eines Referenzmodells durch lokale Modelle durch das Trainingsmodul; und
- Fig. 5: eine schematische Darstellung einer Trainingsphase.

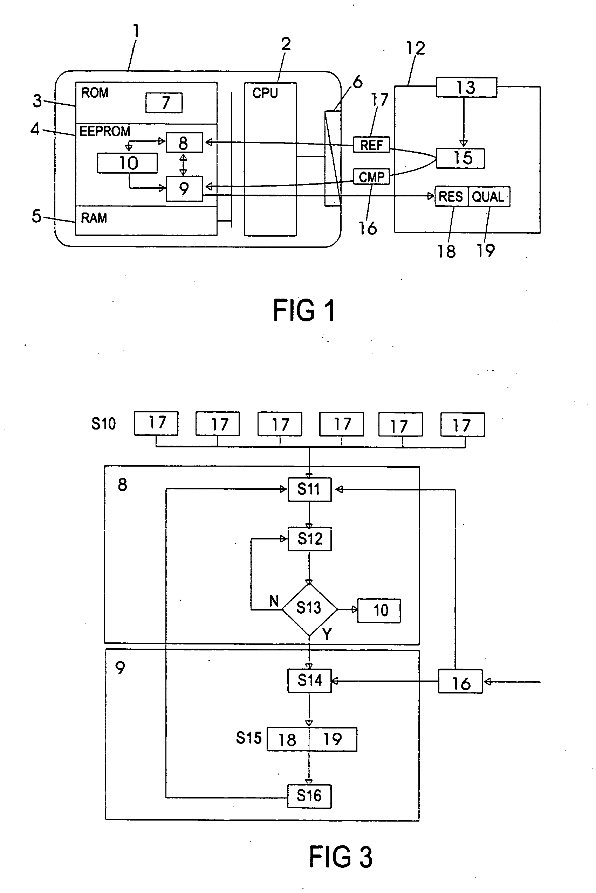

Figur 1 zeigt einen portablen Datenträger, zum Beispiel eine auf einen bestimmten Benutzer personalisierte Chipkarte 1 oder Smart Card, die mit einem externen Gerät, zum Beispiel mit dem biometrischen Terminal 12 einer Zugangskontrollstation, über die Kommunikationsschnittstelle 6 in Kontakt steht. Die Chipkarte 1 ist mit den üblichen Komponenten ausgestattet, insbesondere mit einem Prozessor 2 (CPU) und einer Speicheranordnung, bestehend aus einem permanenten ROM-Speicher 3, einem wiederbeschreibbaren EEPROM-Speicher 4 und einem flüchtigen RAM-Arbeitsspeicher 5. In dem EEPROM-Speicher 4 sind die Daten und Strukturen eines biometrischen Referenzmodells 10 des Benutzers der Chipkarte 1 abgelegt, die die biometrische Identität des Benutzers der Chipkarte 1 repräsentieren. Neben einem Chipkartenbetriebssystem 7 sind auf der Chipkarte weitere System- und Applikationsprogramme sowie Daten gespeichert, insbesondere ein Trainingsmodul 8 und ein Erkennungsmodul 9, die von dem Prozessor 2 ausführbare Applikationsprogramme sein können.

Bei einer Verwendung steht die Chipkarte 1 mit einem externen Terminal 12 in Kontakt, das üblicherweise mit einem biometrischen Sensor 13 ausgestattet ist, der bestimmte biometrische Eigenschaften des Benutzers der Chipkarte 1 aufzeichnet, zum Beispiel Fingerabdrücke, Irismuster, Stimme, Gesicht oder dergleichen. Die aufgezeichneten biometrischen Rohdaten werden von einer biometrischen Einheit 15 in einen biometrischen Merkmalsvektor transformiert, der als biometrischer Vergleichsvektor (CMP) 16 oder biometrischer Referenzvektor (REF) 17 an die Chipkarte 1 übermittelt wird.

Wenn sich der Benutzer der Chipkarte 1 im Anwendungsfall gegenüber dem Terminal 12, das beispielsweise Teil eines Zugangs- oder Grenzkontrollsystems sein kann, authentisieren möchte, wird über den Sensor 13 und die biometrische Einheit 15 ein biometrischer Vergleichsvektor 16 der betreffenden Person erzeugt, über die Kommunikationsschnittstelle 6 von der Chipkarte 1 empfangen und von dem Erkennungsmodul 9 mit dem Referenzmodell 10 verglichen. Falls der biometrische Vergleichsvektor 16 dem Referenzmodell 10 entspricht, ist nachgewiesen, dass die Person der rechtmäßige Benutzer der Chipkarte 1 ist und sich dadurch erfolgreich authentisiert hat. Abschließend überträgt die Chipkarte 1 ein Ergebnissignal an das Terminal 12, das ein Erkennungsergebnis 18 (RES) sowie eine zugehörige Erkennungsqualität 19 (QUAL) als Zuverlässigkeits- oder Konfidenzmaß umfasst. Das Erkennungsergebnis 18 repräsentiert dabei einen Hinweis, wonach die Person als der Benutzer der Chipkarte 1 erkannt oder nicht erkannt wurde. Die Erkennungsqualität 19 des Erkennungsergebnisses 18 wird zum Beispiel in Form einer Wahrscheinlichkeit dafür angegeben, dass das Erkennungsergebnis 18 tatsächlich korrekt ist.

In einer Trainingsphase wird das Referenzmodell 10 von dem Trainingsmodul 8 aufgrund von biometrischen Referenzvektoren 17 erzeugt, die das Trainingsmodul 8 von dem Terminal 12 empfängt. Die biometrischen Referenzdaten 17 sind solche biometrischen Merkmalsvektoren, die mit Sicherheit von dem jeweiligen Benutzer stammen, dessen Referenzmodell 10 erzeugt werden soll. Biometrische Referenzdaten 17 unterscheiden sich von herkömmlichen biometrischen Vergleichsdaten 16 dadurch, dass das Terminal 12 oder eine andere autorisierte Stelle gesondert überprüft hat, dass es sich tatsächlich um biometrische Merkmalsvektoren des Benutzers handelt, z.B. durch zusätzliche Ausweiskontrolle oder dergleichen. Das Trainingsmodul 8 kann das Referenzmodell 10 auch während einer Anwendungs- bzw. Erkennungsphase des Erkennungsmoduls 9 aktualisieren und anpassen, zum Beispiel wenn von einer autorisierten Stelle weitere biometrische Referenzdaten 17 des Benutzers bereitgestellt werden. Dieser Mechanismus des adaptiven Anpassens des Referenzmodells 10 dient dazu, das Referenzmodell 10 an die sich im Laufe der Zeit ändernden biometrischen Eigenschaften des Benutzers anzupassen, die zeitlich veränderlichen Einflüssen, wie z.B. Erkrankungen, Alter, Wetterverhältnissen, Verletzungen oder dergleichen unterliegen können.

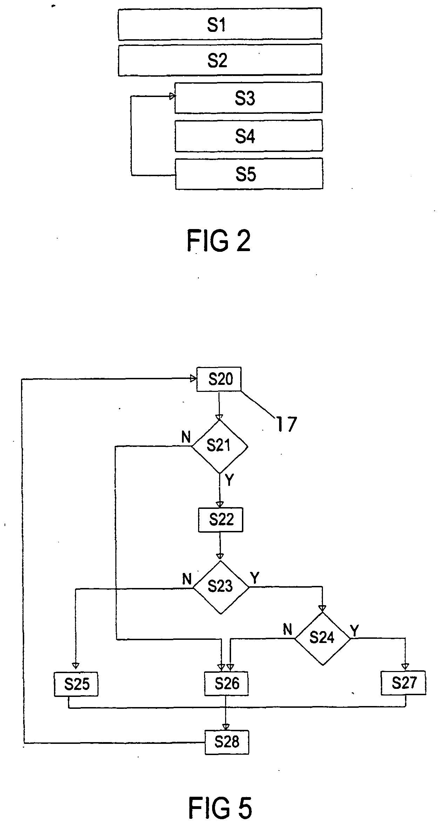

Figur 2 zeigt die prinzipielle fünfschrittige Abfolge eines von der Chipkarte 1 durchgeführten Trainings- und Erkennungsprozesses: In Schritt S1 werden biometrische Beispielmuster des Benutzers der Chipkarte 1 in Form von Referenzvektoren 17 an einem Terminal 12 aufgezeichnet oder einer Datenbank einer autorisierten Stelle entnommen und an das Trainingsmodul 8 über dessen Kommunikationsschnittstelle 6 übertragen. Der Schritt S1 kann z.B. bei der Ausgabe einer personalisierten Chipkarte 1 an den Benutzer von einer Behörde oder sonstigen autorisierten Stelle durchgeführt werden, die eine ausreichende Anzahl von Fingerabdrücken, Stimmproben, Iris-Aufnahmen oder dergleichen akquiriert und diese der Chipkarte 1 für die initiale Trainingsphase S2 zur Verfügung stellt.

In Schritt S2 erzeugt das Trainingsmodul 8 das initiale Referenzmodell 10 im Rahmen einer initialen Trainingsphase und legt es im EEPROM-Speicher 4 in einer geeigneten Datenstruktur zur Benutzung durch das Erkennungsmodul 9 ab. Der nachfolgende Schritt S3 repräsentiert die Anwendungsphase des Erkennungsmoduls 9, in der das Referenzmodell 10 zum Vergleich mit aktuellen biometrischen Vergleichsvektoren 16 verwendet wird. Im Rahmen oder separat nach der Anwendungsphase S3 führt das Trainingsmodul 8 eine adaptive Trainingsphase S4 durch, in der das bestehendes Referenzmodell 10 weiter verfeinert und an veränderliche Eigenschaften des Benutzers anpasst wird. In Schritt S5 erfolgt schließlich der Rücksprung zu Schritt S3, um die Anwendungsphase S3 und die adaptive Trainingsphase S4 zu wiederholen.

Die adaptive Trainingsphase S4, die prinzipiell nach jeder Anwendungsphase S3 durchgeführt werden kann, ist jedoch nur dann sinnvoll, wenn die Anwendungsphase S3 mit einem von dem Benutzer stammenden Referenzvektor 17 durchgeführt wird, da das Referenzmodell 10 nur mit einem solchen Vektor verfeinert werden kann. Dies ist beispielsweise der Fall, wenn eine autorisierte Stelle bestätigen kann, dass die Person, die augenblicklich im Besitz des portablen Datenträgers 1 ist, tatsächlich der rechtmäßige Benutzer der Chipkarte 1 ist und demzufolge der aktuell von dem Terminal 12 ermittelte biometrischen Merkmalsvektor als biometrischer Referenzvektor 17 des Benutzer angesehen werden kann. Die autorisierte Stelle kann dann die adaptive Trainingsphase S4 von Außen anstoßen, z.B. mittels eines entsprechenden an die Chipkarte 1 übertragenen Signals.

In den Trainingsphasen S2 und S4 wird ein biometrischer Referenzvektor 17 von dem Trainingsmodul 10 als positiver Trainingsdatensatz in das gegenwärtige Referenzmodell 10 integriert, so dass zukünftig biometrische Vergleichsvektoren, die ähnlich zu diesem biometrischen Referenzvektor 17 sind, von dem Erkennungsmodul 9 aufgrund des aktualisierten Referenzmodells 10 als von dem Benutzer stammend erkannt werden. Neben der Integration positiver Trainingsdaten können auch negative Trainingsdaten integriert werden, von denen einer autorisierten Stelle bekannt ist, dass sie nicht von dem Benutzer stammen. Das Referenzmodell 10 kann entweder mit diesen negativen Vergleichdaten getestet werden, oder das Trainingsmodul 8 passt das Referenzmodell 10 mit ihnen derart an, dass Vergleichsvektoren 16, die ähnlich zu den negativen biometrischen Referenzdaten sind, von dem Erkennungsmodul 8 als nicht von dem Benutzer stammend zurückgewiesen werden.

Die Trainingsphasen S2 und S4 werden nachfolgend im Zusammenhang mit den Figuren 3 bis 5 genauer erläutert: Figur 3 zeigt das Ineinandergreifen der Trainingsphasen S2 und S4 und der Anwendungsphase S3. Im Rahmen der initialen Trainingsphase S2 stellt das Terminal 12 dem Trainingsmodul 8 biometrische Referenzvektoren 17 in Schritt S10 zur Verfügung. Diese werden von dem Trainingsmodul 8 über die Kommunikationsschnittstelle 6 in einen Speicher 4, 5 des Datenträgers 1 geladen und dort in Schritt S11 in der Form aufbereitet, wie die Referenzvektoren 17 von dem Trainingsmodul 8 benötigt werden. Die Aufbereitung im Rahmen des Schritts S11 kann beispielsweise Datenkonversionen, Gewichtungen einzelner Vektorkomponenten, Normierungen und dergleichen umfassen.

In der Schleife S12, S13 wird das Referenzmodell 10 schrittweise aufgebaut, indem aus den biometrischen Referenzvektoren 17 Modellstützpunkte des Referenzmodells 10 gebildet werden, die z.B. Stützstellen einer Interpolation bilden. Der Trainingsschritt S12 wird sooft durchgeführt, bis in Schritt S13 festgestellt wird, dass das Referenzmodell 10 eine bestimmte Qualität oder Güte erreicht hat. Der Abfrageschritt S13 stellt sicher, dass ein Referenzmodell 10 erst dann in die Anwendungsphase S3 (Fig. 2) übergeht, wenn eine ausreichend hohe Erkennungsrate erreicht werden kann. Prinzipiell kann in Schritt S13 jedes beliebige Gütekriterium verwendet werden, beispielsweise die Anzahl oder Dichte von Modellstützstellen in dem Referenzmodell 10 oder eine Mindesterkennungsrate bei einem Test mit positiven und negativen Beispielvektoren.

Bei dem Anwendungsschritt S14 wird ein biometrischer Vergleichsvektor 16 von dem Erkennungsmodul 9 verarbeitet. Das Erkennungsmodul 9 prüft, ob der Vergleichsvektor 16 dem gegenwärtigen Referenzmodell 10 entspricht. Falls dies der Fall ist, wird in Schritt S15 als Erkennungsergebnis 18 ein Signal erzeugt, wonach die Person, deren biometrischer Vergleichsvektor 16 geprüft wurde, ein authentisierter Benutzer der Chipkarte 1 ist. Anderenfalls, wenn das Erkennungsmodul 9 in Schritt S14 erkennt, dass der Vergleichsvektor 16 nicht dem Referenzmodell 10 entspricht, wird die Authentisierung der betreffenden Person verweigert. Mit dem Erkennungsergebnis 18 kann zusätzlich eine Erkennungsqualität 19 erzeugt werden, die die Zuverlässigkeit des Erkennungsergebnisses 18 angibt, zum Beispiel in Form eines Wahrscheinlichkeitswerts.

In Schritt S16 findet schließlich eine Auswertung der Ergebnisse 18,19 statt, bei der beispielsweise geprüft werden kann, ob das Referenzmodell mit dem biometrischen Vergleichsvektor 16 im Rahmen einer adaptiven Trainingsphase S4 zu aktualisieren ist. Dies ist beispielsweise dann sinnvoll, wenn durch ein entsprechendes Signal von dem Terminal 12 zweifelsfrei feststeht, dass der biometrische Vergleichsvektor 16 tatsächlich ein von dem Benutzer stammender Referenzvektor ist, der fälschlicherweise von dem Erkennungsmodul 9 als nicht von dem Benutzer stammend zurückgewiesen wurde. In diesem Fall wird das Referenzmodell 10 durch Rücksprung zu Schritt S11 mit diesem Referenzvektor aktualisiert. Ebenso kann in Schritt S16 entschieden werden, einen korrekt als von dem Benutzer stammend akzeptierten Referenzvektor in das Referenzmodell 10 zu integrieren, wenn z.B. die Dichte der Modellstützstellen in dem betreffenden lokalen Bereich des Referenzmodells 10 gering ist.

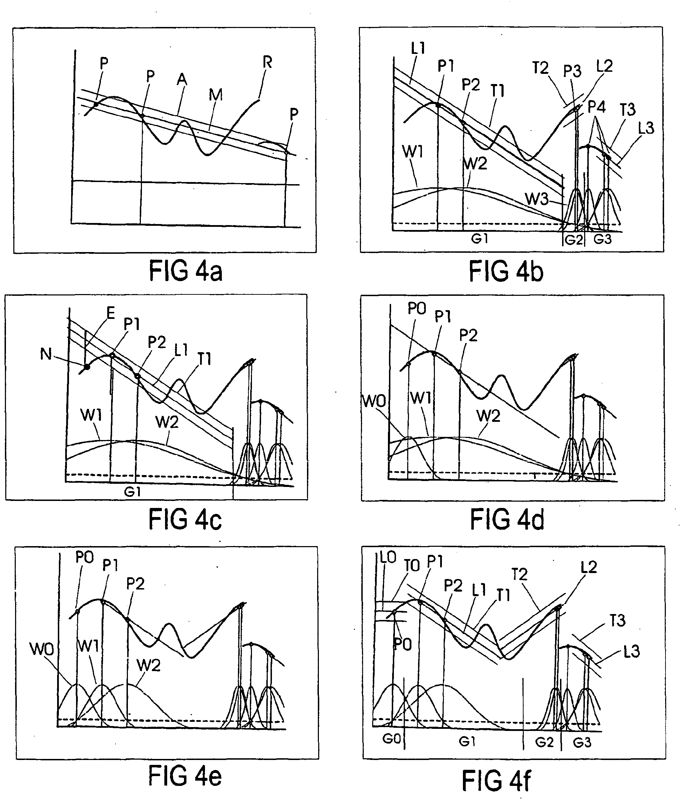

Die von dem Trainingsmodul 8 durchgeführte eigentliche Trainingsphase S2, S4 (Fig. 2) wird in Figur 5 schrittweise erläutert, während Figur 4 ein illustratives Beispiel einer Definition eines adaptiven Referenzmodells M durch mehrere lokale Modelle L0, L1, L2, L3 anhand von entsprechenden Modellstützstellen P zeigt.

Die Kurve R in Figur 4A symbolisiert die Lage und Gestalt eines idealen Referenzmodells, mit dem sämtliche Merkmalsvektoren des betreffenden Benutzers korrekt klassifiziert und sämtliche nicht von dem Benutzer stammenden Merkmalsvektoren korrekt zurückgewiesen werden könnten. Das Ziel der Trainingsphasen S2 und S4 ist, diese biometrischen Eigenschaften des Benutzers R durch ein Referenzmodell M möglichst genau zu approximieren. In den Diagrammen der Figuren 4a bis 4f repräsentiert die Abzisse (x-Achse) jeweils qualitativ die Eingabewerte des Referenzmodells M, d.h. die jeweils erfassten biometrischen Merkmale, während die Ordinate (y-Achse) die entsprechenden Ausgabewerte qualitativ angibt, d.h. die in Abhängigkeit von dem jeweiligen Sensor 13 und sonstigen Eigenschaften und Zuständen des Terminals 12 und des Benutzers tatsächlich ermittelten Messwerte. In dem durch diese beiden Achsen aufgespannten Raum kann das Referenzmodell M als abschnittsweise definierte Kurve veranschaulicht werden, wobei aus den Diagrammen zunächst kein konkretes Erkennungsergebnis (Klassifikationsaussage) abgelesen werden kann. Dieses ergibt sich erst durch Angabe eines Akzeptanzbereichs A des Referenzmodells M, der diejenigen Merkmalsvektoren bestimmt, die modellgemäß als von dem Benutzer stammend akzeptiert werden.

Figur 4a zeigt, dass das ideale Modell R durch ein Referenzmodell M anhand von Stützstellen P approximiert wird, die aus Referenzvektoren 17 abgeleitet werden, die im Rahmen des Schrittes S1 der Fig. 2 bereitgestellt werden. Das jeweils aktuelle Referenzmodell M ergibt sich durch eine prinzipiell beliebige Interpolation aus den existierenden Stützstellen P, wobei im folgenden der Einfachheit halber von einer linearen Interpolation ausgegangen werden soll. Jedoch ist auch jede andere Interpolation möglich, z.B. auch eine Spline- oder kubische Interpolation. Der Akzeptanzbereich A des Referenzmodells M wird als eine Umgebung um die Gerade des Referenzmodells M angegeben, wobei alle biometrischen Vergleichsvektoren, die innerhalb des Akzeptanzbereiches A liegen, modellgemäß als von dem Benutzer stammend akzeptiert werden.

Ausgehend von der in Figur 4a gezeigten Situation mit drei Stützstellen P repräsentiert die Figur 4b einen späteren Zeitpunkt des Trainingsprozesses mit einer Vielzahl von Stützstellen P1, P2, P3, P4, die insgesamt drei lokale Modelle L1, L2, L3 bilden, die das Referenzmodell M abschnittsweise als Geradenstücke definieren. Jedes lokale Modell L besitzt einen Toleranzbereich T, wobei die Toleranzbereiche T aller lokalen Modelle L den Akzeptanzbereich A des Gesamtreferenzmodells M ergeben.

Jeder Modellstützstelle P ist eine Wahrscheinlichkeitsverteilung W zugeordnet, die einerseits eine Erkennungsqualität 19 und andererseits einen Gültigkeitsbereich G des entsprechenden lokalen Modells L definiert. Der Gültigkeitsbereich G1 des lokalen Modells L1 wird beispielsweise als derjenige Bereich der Abzisse definiert, der von den Wahrscheinlichkeitsverteilungen W1 und W2 der Stützstellen P1 und P2 des lokalen Modells L1 abgedeckt wird. Die Grenze des Gültigkeitsbereichs G1 zu dem Gültigkeitsbereich G2 des lokalen Modells L2 liegt dort, wo die Wahrscheinlichkeitsverteilung W2 der Stützstelle P2 die Wahrscheinlichkeitsverteilung W3 der Stützstelle P3 des lokalen Modells L2 schneidet. Der Gültigkeitsbereich G3 des lokalen Modells L3 wird wiederum durch die Wahrscheinlichkeitsverteilungen der Stützstellen P4 bestimmt.

Bei einer Klassifikation eines Vergleichsvektors 17 durch das Erkennungsmodul 9 wird nun zunächst ermittelt, in welchem Gültigkeitsbereich G der Vergleichsvektor 17 liegt, um anschießend zu prüfen, ob der Vergleichvektor 17 bezüglich des betreffenden lokalen Modells L modellkonform ist. Falls dies der Fall ist, kann anhand der entsprechenden Wahrscheinlichkeitsverteilung W eine Erkennungsqualität 19 angegeben werden. Je höher dieser Wahrscheinlichkeitswert ist, desto wahrscheinlicher ist das Erkennungsergebnis 18 bezüglich des betreffenden biometrischen Vergleichsvektors 17 korrekt. Das bedeutet, dass eine korrekte Klassifikation eines Vergleichsvektors 17 umso wahrscheinlicher ist, je näher dieser Vergleichsvektor 17 in dem betreffenden lokalen Modell L an einer Modellstützstelle P liegt.

Figur 4c zeigt einen Referenzvektor N, der innerhalb des Gültigkeitsbereichs G1 des Modells L1 liegt. Der Referenzvektor N liegt zwar genau auf der Idealkurve R - stammt also sicher von dem Benutzer - liegt aber nicht innerhalb des Toleranzbereichs T1 des lokalen Modells L1 und wird insofern fälschlicherweise zurückgewiesen. Die Distanz zwischen dem Punkt N und der Geraden, die das lokale Modell L1 repräsentiert, bestimmt den Erkennungsfehler E. In einer Trainingsphase S2 oder S4 (Fig. 2), wird das gegenwärtige Referenzmodell M dann mit dem neuen Referenzvektor N aktualisiert, indem eine entsprechende Stützstelle P0 mit einer Wahrscheinlichkeitsverteilung W0 eingefügt wird (Fig. 4d), deren Breite an diejenige der benachbarten Wahrscheinlichkeitsverteilungen W1 und W2 der Stützstellen P1 und P2 angepasst wird. Die Breiten der benachbarten Wahrscheinlichkeitsverteilungen W1 und W2 müssen ebenfalls angepasst werden, um zu vernünftigen an der Lage der Stützstellen P0, P1 und P2 orientierten Gültigkeitsbereichen zu kommen (Fig. 4e).

Figur 4f zeigt schließlich, dass die Stützstelle P0 nicht zur feineren Definition des lokalen Modells L1 verwendet wird, sondern aus ihr ein neues lokales Modell L0 gebildet wird, weil z.B. das lokale Modell L1 die zugelassene Maximalzahl der Stützstellen pro lokalem Modell überschritten hat, oder ein sonstiges Kriterium erfüllt ist. Das Referenzmodell M wird nunmehr aus vier lokalen Modellen L0, L1, L2 und L3 mit individuellen Gültigkeitsbereichen G0, G1, G2 und G3 gebildet. Der Akzeptanzbereich A des Referenzmodells M setzt sich aus vier Toleranzbereichen T1, T2, T3 und T4 abschnittsweise zusammen.

Neben der oben beschriebenen Einführung von Modellstützstellen N auf Basis eines sicher von dem Benutzer des Datenträgers stammenden Referenzvektors 17 ist es auch möglich, negative Modellstützstellen P in das Referenzmodell M einzuführen, die solche Merknalsvektoren repräsentieren, die sicher nicht von dem betreffenden Benutzer stammen. Eine negative Modellstützstelle kann dann beispielsweise ein lokales Zurückweisungsmodell mit einem entsprechenden Rückweisungsbereich bilden, wobei ein zu klassifizierender biometrischer Vergleichsvektor 16, der innerhalb des Rückweisungsbereichs liegt, von dem Erkennungsmodul 9 als nicht von dem Benutzer stammend zurückgewiesen wird.

Figur 5 veranschaulicht noch einmal die Schritte der Trainingsphase S2, S4 anhand der in Figur 4 gezeigten Modelldefinition. In Schritt S20 wird dem Trainingsmodul 8 zunächst ein von dem Benutzer stammender Referenzvektor N bereitgestellt. In Schritt S21 wird geprüft, ob bereits ein Referenzmodell M existiert, d. h., ob überhaupt Modellstützstellen P vorhanden sind. Falls dies nicht der Fall ist, wird der Referenzvektor N in Schritt S26 ohne weitere Prüfung als Modellstützstelle P0 in das Referenzmodell M eingefügt und eine lokales Modell L0 mit einen Toleranzbereich T0 auf dessen Basis gebildet. Falls in Schritt S21 festgestellt wird, dass bereits Modellstützstellen P existieren, wird in Schritt S22 geprüft, ob der Referenzvektor N gemäß dem gegenwärtigen Referenzmodell M richtigerweise als von dem Benutzer stammend akzeptiert wird oder fälschlicherweise zurückgewiesen wird. Falls sich dieses Erkennungsergebnis 18 in Schritt S23 als falsch herausstellt (d.h., der Referenzvektor N wurde als nicht von dem Benutzer stammend zurückgewiesen; vgl. Fig. 4c), wird in Schritt S25 ein neuer Modellstützpunkt P0 auf Basis des Referenzvektors N in das Referenzmodell M eingefügt, um eine solche Fehlklassifikation in Zukunft zu vermeiden.

Falls sich das Erkennungsergebnis 18 in Schritt S23 als richtig herausstellt (d.h., der Referenzvektor N wurde akzeptiert), besteht zunächst keine unbedingte Veranlassung, eine entsprechende Modellstützstelle P0 in das Referenzmodell M einzufügen. Dennoch wird in Schritt S24 überprüft, ob bereits eine ausreichende Anzahl von Modellstützstellen P in dem Referenzmodell M oder dem betreffenden lokalen Modell L vorhanden ist. Falls dies nicht der Fall ist, wird in Schritt S26 trotzdem eine neue Modellstützstelle P0 auf Basis des Referenzvektors N in das Referenzmodell M eingefügt, um die lokale Dichte der Modellstützstellen P in dem Referenzmodell M (oder dem betreffenden lokalen Modell L) zu erhöhen und so eine möglicht feine lokale Definition des Referenzmodells M zu erreichen. Falls in Schritt S24 festgestellt wird, dass das Referenzmodell M bereits durch eine ausreichende Anzahl von Modellstützstellen P definiert ist, können die vorhandenen Modellstützstellen in Schritt S27 angepasst werden, z.B. indem sie in dem Referenzmodell M in Richtung des Referenzvektors verschoben oder versetzt werden, um eine möglichst homogene Modellstützstellendichte zu erreichen, oder indem ein lokales Modell L in zwei neue lokale Modell geteilt wird (vgl. Fig. 4f). Bei jeder Änderung des Referenzmodells M werden in Schritt S28 die veränderten Parameter angepasst bzw. in einer geeigneten Datenstruktur abgespeichert. Dies betrifft insbesondere die Wahrscheinlichkeitsverteilungen W, Gültigkeitsbereiche G und Toleranzbereiche T.

Im folgenden wird abschließend im Hinblick auf die fünf Schritte S1 bis S5 der Figur 2 die Arbeitsweise des Trainingsmoduls 8 und des Erkennungsmoduls 9 anhand eines Beispiels erläutert. Dazu werden in Schritt S1 beispielsweise für eine Fingerabdruckerkennung von einem Benutzer der Chipkarte 1 nicht nur positive Referenzvektoren zusammengestellt, sondern auch negative Referenzvektoren von fremden Personen, die unpersonalisierte Trainingsbeispiele sein können. Idealerweise werden die Trainingsbeispiele ohnehin in einer Datenbank ohne personenbezogene Information abgelegt, so dass sie zu Trainings-und Verifikationszwecken zufällig aus der Datenbank ausgewählt und verwendet werden können.

In den beiden Trainingsphasen S2 und S4 (vgl. Fig. 2) wird ein Referenzmodell M mit allen positiven und negativen Referenzvektoren generiert. Hierbei kann das oben beschriebene Trainingsverfahren prinzipiell durch beliebige adaptive Verfahren realisiert werden, insbesondere statistische Verfahren, Verfahren aus dem Bereich des kognitiven Lernens oder der künstlichen Intelligenz, lernende Klassifikatoren und dergleichen. Insbesondere ist es möglich, den iterativen Lernvorgang der Schritte S2 und S4 auf der Basis von neuronalen Netzen zu implementieren. Dabei können neue Neuronen als Basis für die lokalen Modelle L verwendet werden. Neue Neuronen sind demzufolge immer dann in das Referenzmodell M einzufügen, wenn ein bestimmtes lokales Modell M noch keine ausreichende Anzahl von Modellstützstellen P besitzt, oder ein negativer Referenzvektor zur Abgrenzung von den Merkmalsvektoren des Benutzers gelernt werden soll bzw. die Erkennungsqualität 19 so schlecht ist, dass zur Verfeinerung des Gesamtreferenzmodells M ein zusätzliches lokales Modell L eingeführt werden muss.

Werden beispielsweise lineare Modelle L in einem n-dimensionalen Merkmalsraum eingesetzt, so werden pro Modell n+1 Neuronen benötigt. Für die Bestimmung der Erkennungsqualität 19 erhält jedes Neuron eine zusätzliche radiale Basisfunktion (entsprechend dem Toleranzbereich T in Fig. 4), deren Ausdehnung durch Neuronen der jeweils anderen Musterklasse bestimmt wird. Ist die Erkennungsqualität 19 ausreichend hoch, wird lediglich das aktive Neuron in Richtung eines zu klassifizierenden Vergleichsvektors 16 verschoben. Auf diese Art und Weise kann auch mit vergleichsweise kleinen Trainingsdatensätzen ein adäquates Referenzmodell M erstellt werden. Dieses Verfahren steht jedoch lediglich stellvertretend für die Klasse der adaptiven und lernenden Verfahren.

In der Anwendungsphase S3 wird ein biometrischer Vergleichsvektor 16 anhand des aktuellen Referenzmodells 10 verifiziert. Am Beispiel des oben beschriebenen Lernverfahrens würde über die radiale Basisfunktion in Kombination mit dem entsprechenden aktiven Neuron das zuständige lokale Modell selektiert. Das Erkennungsergebnis 18 wäre dann im einfachsten Fall der Wert des lokalen Modells L an der Stelle des Vergleichsvektors 16 und die Erkennungsqualität 19 entspräche der Aktivierung der radialen Basisfunktion des aktiven Neurons.

## Patentansprüche

1. Verfahren zum Bereitstellen eines Referenzmodells (10; M) mit einem Akzeptanzbereich (A) auf einem portablen Datenträger (1) zur biometrischen Erkennung eines Benutzers des Datenträgers (1), wobei ein biometrischer Vergleichsvektor (16), der innerhalb des Akzeptanzbereichs (A) des Referenzmodells (10; M) liegt, als von dem Benutzer stammend akzeptiert wird, wobei das Verfahren die folgenden Schritte umfasst:
Definieren des Referenzmodells (10; M) durch Modellstützstellen (P, P0-P4), die aus jeweils von dem Benutzer stammenden biometrischen Referenzvektoren (17; N) gebildet werden, während einer initialen Trainingsphase, wobei zur Erzeugung des Referenzmodells (10; M) eine Vielzahl von biometrischen Referenzvektoren (17; N) aufgenommen wird, und wobei das Referenzmodell (10; M) abschnittsweise durch lokale Modelle (L0-L3) mit jeweils einem Gültigkeitsbereich (G0-G3) definiert wird, und Einfügen einer weiteren Modellstützstelle (P, P0-P4) in das Referenzmodell (10; M), während einer Anwendungsphase des Referenzmodells (10; M) bei der Prüfung eines Vergleichsvektors (16), wenn der Vergleichsvektor (16) außerhalb des Akzeptanzbereichs (A) des Referenzmodells (10; M) liegt und feststeht, dass der Vergleichsvektors (16) tatsächlich von dem Benutzer stammt,
wobei ein lokales Modell (L0-L3) durch zumindest eine Modellstützstelle (P, P0-P4) gebildet wird, und zur Erkennung des Benutzers dasjenige lokale Modell (L0-L3) des Referenzmodells (10; M) verwendet wird, in dessen Gültigkeitsbereich (G0-G3) ein biometrischer Vergleichsvektor (16) des Benutzers liegt und wobei jedem lokalen Modell (L0-L3) jeweils ein Gültigkeitsbereich (G0-G3) zugeordnet wird, der durch eine Wahrscheinlichkeitsverteilung (W0-W2) bestimmt wird, die der das lokale Modell (L0-L3) bildenden zumindest einen Modellstützstelle (P, P0-P4) zugeordnet wird, wobei sich die Breite der Wahrscheinlichkeitsverteilung (W0-W2) der Modellstützstelle (P, P0-P4) aus den Wahrscheinlichkeitsverteilungen (W0-W2) benachbarter Modellstützstellen (P, P0-P4) ergibt, und die einer Modellstützstelle (P, P0-P4) zugeordnete Wahrscheinlichkeitsverteilung (W0-W2) eine Erkennungsqualität (19) eines als von dem Benutzer stammend akzeptierten biometrischen Vergleichsvektors (16) angibt, der innerhalb des Gültigkeitsbereichs (G0-G3) desjenigen lokalen Modells (L0-L3) liegt, das durch zumindest die Modellstützstelle (P, P0-P4) gebildet wird.

2. Verfahren nach Anspruch 1, **dadurch gekennzeichnet, dass** jedem lokalen Modell (L0-L3) jeweils ein Toleranzbereich (T0-T3) zugeordnet wird, wobei die Toleranzbereiche (T0-T3) aller lokalen Modelle (L0-L3) den Akzeptanzbereich (A) des Referenzmodells (10; M) bilden, und dass ein biometrischer Vergleichsvektor (16), der in dem Toleranzbereich (T0-T3) eines lokalen Modells (L0-L3) liegt, als von dem Benutzer stammend akzeptiert wird.

3. Verfahren nach Anspruch 1, **dadurch gekennzeichnet, dass** bei Einfügen einer Modellstützstelle (P, P0-P4) in das Referenzmodell (10; M) die Breiten der Wahrscheinlichkeitsverteilung (W0-W2) der Modellstützstelle (P, P0-P4) und der Wahrscheinlichkeitsverteilungen (W0-W2) benachbarter Modellstützstellen (P, P0-P4) aneinander angepasst werden.

4. Verfahren nach einem der Ansprüche 1 bis 3, **dadurch gekennzeichnet, dass**, wenn die Anzahl der ein lokales Modell (L0-L3) bildenden Modellstützstellen (P, P0-P4) eine vorgegebene Maximalzahl überschreitet, eine weitere Modellstützstelle (P, P0-P4) in dieses lokale Modell (L0-L3) nicht eingefügt wird und/oder das lokale Modell (L0-L3) in zwei neue lokale Modelle (L0-L3) aufgespaltet wird.

5. Verfahren nach einem der Ansprüche 1 bis 4, **dadurch gekennzeichnet, dass** eine Entscheidung darüber, ob ein biometrischer Vergleichsvektor (16) ein von dem Benutzer stammender biometrischer Referenzvektor (17; N) ist, von einer autorisierten Stelle (12) außerhalb des Datenträgers (1) vorgenommen wird.

6. Portabler Datenträger (1), umfassend einen Speicher (4, 5), eine Kommunikationsschnittstelle (6), einen Prozessor (2) und ein jeweils von dem Prozessor (2) ausführbares Erkennungsmodul (9) und Trainingsmodul (8), wobei das Trainingsmodul (8) eingerichtet ist, in dem Speicher (4,5) ein Referenzmodell (10; M) mit einem Akzeptanzbereich (A) zur biometrischen Erkennung eines Benutzers des Datenträgers (1) durch das Erkennungsmodul (9) bereitzustellen, wobei ein biometrischer Vergleichsvektor (16), der innerhalb des Akzeptanzbereichs (A) des Referenzmodells (10; M) liegt, von dem Erkennungsmodul (9) als von dem Benutzer stammend akzeptiert wird, wobei das Trainingsmodul (8) eingerichtet ist, während einer initialen Trainingsphase das Referenzmodell (10; M) durch Modellstützstellen (P, P0-P4) zu definieren, wobei zur Erzeugung des Referenzmodells (10; M) eine Vielzahl von biometrischen Referenzvektoren (17; N) aufgenommen wird, die jeweils aus über die Kommunikationsschnittstelle (6) empfangenen und von dem Benutzer stammenden biometrischen Referenzvektoren (17; N) gebildet werden,
wobei das Trainingsmodul (8) während einer Anwendungsphase des Referenzmodells (10; M) zur Prüfung eines Vergleichsvektors (16) eine weitere Modellstützstelle (P, P0-P4) in das Referenzmodell (10; M) einfügt, wenn der Vergleichsvektor (16) außerhalb des Akzeptanzbereichs (A) des Referenzmodells (10; M) liegt und feststeht, dass der Vergleichsvektor (16) tatsächlich von dem Benutzer stammt, wobei
- das Trainingsmodul (8) eingerichtet ist, das Referenzmodell (10; M) abschnittsweise durch lokale Modelle (L0-L3) mit jeweils einem Gültigkeitsbereich (G0-G3) zu definieren, ein lokales Modell (L0-L3) durch zumindest eine Modellstützstelle (P, P0-P4) zu bilden und die lokalen Modelle (L0-L3) in dem Speicher (4, 5) abzulegen, und das Trainingsmodul (8) eingerichtet ist, einem lokalen Modell (L0-L3) einen Gültigkeitsbereich (G0-G3) zuzuordnen, der durch eine Wahrscheinlichkeitsverteilung (W0-W2) bestimmt wird, die der das lokale Modell (L0-L3) bildenden zumindest einen Modellstützstelle (P, P0-P4) zugeordnet wird, und die Breite der Wahrscheinlichkeitsverteilung (W0-W2) der Modellstützstelle (P, P0-P4) abhängig von den Wahrscheinlichkeitsverteilungen (W0-W2) benachbarter Modellstützstellen (P, P0-P4) festzulegen; und
- das Erkennungsmodul (9) eingerichtet ist, dasjenige lokale Modell (L0-L3) des Referenzmodells (10; M) zu verwenden, in dessen Gültigkeitsbereich (G0-G3) ein über die Kommunikationsschnittstelle (6) empfangener biometrischer Vergleichsvektor (16) des Benutzers liegt, und das Erkennungsmodul (9) eingerichtet ist, aus der einer Modellstützstelle (P, P0-P4) zugeordneten Wahrscheinlichkeitsverteilung (W0-W2) eine Erkennungsqualität (19) eines über die Kommunikationsschnittstelle (6) empfangenen und als von dem Benutzer stammend akzeptierten biometrischen Vergleichsvektors (16) zu ermitteln, der innerhalb des Gültigkeitsbereichs (G0-G3) desjenigen lokalen Modells (L0-L3) liegt, das durch zumindest die Modellstützstelle (P, P0-P4) gebildet wird.

7. Datenträger (1) nach Anspruch 6, **dadurch gekennzeichnet, dass**
- das Trainingsmodul (8) eingerichtet ist, jedem lokalen Modell (L0-L3) einen Toleranzbereich (T0-T3) zuzuordnen und den Akzeptanzbereich (A) des Referenzmodells (10; M) aus den Toleranzbereichen (T0-T3) aller lokalen Modelle (L0-L3) zu bilden, und
- das Erkennungsmodul (9) eingerichtet ist, einen über die Kommunikationsschnittstelle (9) empfangenen biometrischen Vergleichsvektor (16), der innerhalb des Toleranzbereichs (T0-T3) eines lokalen Modells (L0-L3) liegt, als von dem Benutzer stammend zu akzeptieren.

8. Datenträger (1) nach Anspruch 6, **dadurch gekennzeichnet, dass** das Trainingsmodul (8) eingerichtet ist, bei Einfügen einer Modellstützstelle (P, P0-P4) in das Referenzmodell (10; M) die Breiten der Wahrscheinlichkeitsverteilung (W0-W2) der Modellstützstelle (P, P0-P4) und der Wahrscheinlichkeitsverteilungen (W0-W2) benachbarter Modellstützstellen (P, P0-P4) aneinander anzupassen.

9. Datenträger (1) nach einem der Ansprüche 6 bis 8, **dadurch gekennzeichnet, dass** das Trainingsmodul (8) eingerichtet ist, eine weitere Modellstützstelle (P, P0-P4) in das lokale Modell (L0-L3) nicht einzufügen und/ oder das lokale Modell (L0-L3) in zwei neue lokale Modelle (L0-L3) aufzuspalten und in dem Speicher (4, 5) abzulegen, wenn die Anzahl der ein lokales Modell (L0-L3) bildenden Modellstützstellen (P, P0-P4) eine in dem Speicher (4, 5) abgelegte vorgegebene Maximalzahl überschreitet.

10. Datenträger (1) nach einem der Ansprüche 6 bis 9, **dadurch gekennzeichnet, dass** das Trainingsmodul (8) eingerichtet ist, als eine in das Referenzmodell (10; M) einzufügende Modellstützstelle (P, P0-P4) den zugehörigen biometrischen Referenzvektor (17; N) des Benutzers als neue Modellstützstelle (P, P0-P4) in dem Speicher (4, 5) abzulegen.

11. Datenträger (1) nach einem der Ansprüche 6 bis 10, **dadurch gekennzeichnet, dass**
- das Erkennungsmodul (9) eingerichtet ist, eine Erkennung eines biometrischen Vergleichsvektors (16) durch ein Abgleichen des Vergleichsvektors (16) mit einem in dem Speicher (4, 5) abgelegten Referenzmodell (10; M) des Benutzers durchzuführen; und
- das Trainingsmodul (8) eingerichtet ist, das Referenzmodell (10; M) im Rahmen einer initialen Trainingsphase des Erkennungsmoduls (9) aus mehreren über die Kommunikationsschnittstelle (6) empfangenen Referenzvektoren (17; N) zu erzeugen und in dem Speicher (4, 5) abzulegen.

12. Datenträger (1) nach einem der Ansprüche 6 bis 12, **dadurch gekennzeichnet, dass**
- das Erkennungsmodul (9) eingerichtet ist, eine Erkennung eines biometrischen Vergleichsvektors (16) durch ein Abgleichen des Vergleichsvektors (16) mit einem in dem Speicher (4, 5) abgelegten adaptiven Referenzmodell (10; M) des Benutzers durchzuführen; und
- das Trainingsmodul (8) eingerichtet ist, das Referenzmodell (10; M) im Rahmen einer Anwendungsphase des Erkennungsmoduls (9) mit über die Kommunikationsschnittstelle (6) empfangenen biometrischen Referenzvektoren (17; N) kontinuierlich anzupassen und in dem Speicher (4, 5) abzulegen.

13. Datenträger (1) nach einem der Ansprüche 6 bis 12, **dadurch gekennzeichnet, dass** das Trainingsmodul (8) eingerichtet ist, beim Einfügen einer Modellstützstelle (P, P0-P4) in das Referenzmodell (10; M), eine Information darüber, dass der zugehörige Referenzvektor (17; N) außerhalb des Akzeptanzbereichs (A) des Referenzmodells (10; M) liegt, von dem Erkennungsmodul (9) zu erhalten, und eine Information darüber, dass der zugehörige Referenzvektor (17; N) von dem Benutzer stammt, von einer autorisierten Stelle (12) über die Kommunikationsschnittstelle (6) zu empfangen.

## Claims

1. A method for providing a reference model (10; M) having an acceptance range (A) on a portable data carrier (1) for biometrically recognizing a user of the data carrier (1), wherein a biometric comparison vector (16) which lies within the acceptance range (A) of the reference model (10; M) is accepted as coming from the user, the method comprising the following steps:
defining the reference model (10; M) by model nodes (P, P0-P4) which are formed from biometric reference vectors (17; N) in each case coming from the user, during an initial training phase, wherein for generating the reference model (10; M) a multitude of biometric reference vectors (17; N) is recorded, and wherein the reference model (10; M) is defined piecewise by local models (L0-L3) each having a validity range (G0-G3), and adding a further model node (P, P0-P4) to the reference model (10; M), during an application phase of the reference model (10; M) upon checking a comparison vector (16) when the comparison vector (16) lies outside the acceptance range (A) of the reference model (10; M) and it is certain that the comparison vector (16) actually comes from the user,
wherein a local model (L0-L3) is formed by at least one model node (P, P0-P4), and for recognizing the user that local model (L0-L3) of the reference model (10; M) is used in whose validity range (G0-G3) a biometric comparison vector (16) of the user lies and wherein each local model (L0-L3) is assigned in each case a validity range (G0-G3) which is determined by a probability distribution (W0-W2) which is assigned to the at least one model node (P, P0-P4) forming the local model (L0-L3), wherein the width of the probability distribution (W0-W2) of the model node (P, P0-P4) results from the probability distributions (W0-W2) of neighboring model nodes (P, P0-P4), and the probability distribution (W0-W2) assigned to a model node (P, P0-P4) indicates a recognition quality (19) of a biometric comparison vector (16) accepted as coming from the user which lies within the validity range (G0-G3) of that local model (L0-L3) which is formed by at least the model node (P, P0-P4).

2. The method according to claim 1, **characterized in that** each local model (L0-L3) is assigned in each case a tolerance range (T0-T3), the tolerance ranges (T0-T3) of all local models (L0-L3) forming the acceptance range (A) of the reference model (10; M), and that a biometric comparison vector (16) which lies in the tolerance range (T0-T3) of a local model (L0-L3) is accepted as coming from the user.

3. The method according to claim 1, **characterized in that** upon addition of a model node (P, P0-P4) to the reference model (10; M) the widths of the probability distribution (W0-W2) of the model node (P, P0-P4) and of the probability distributions (W0-W2) of neighboring model nodes (P, P0-P4) are adjusted to each other.

4. The method according to any of claims 1 to 3, **characterized in that** when the number of model nodes (P, P0-P4) forming a local model (L0-L3) exceeds a predetermined maximum number, a further model node (P, P0-P4) is not added to this local model (L0-L3) and/or the local model (L0-L3) is split into two new local models (L0-L3).

5. The method according to any of claims 1 to 4, **characterized in that** a decision about whether a biometric comparison vector (16) is a biometric reference vector (17; N) coming from the user is effected by an authorized body (12) outside the data carrier (1).

6. A portable data carrier (1) comprising a memory (4, 5), a communication interface (6), a processor (2), and a recognition module (9) and a training module (8) each executable by the processor (2), wherein the training module (8) is set up to provide in the memory (4, 5) a reference model (10; M) having an acceptance range (A) for the biometric recognition of a user of the data carrier (1) by the recognition module (9), wherein a biometric comparison vector (16) which lies within the acceptance range (A) of the reference model (10; M) is accepted by the recognition module (9) as coming from the user, wherein the training module (8) is set up to define the reference model (10; M) by model nodes (P, P0-P4) during an initial training phase, wherein for generating the reference model (10; M) a multitude of biometric reference vectors (17; N) is recorded, which in each case are formed from biometric reference vectors (17; N) received via the communication interface (6) and coming from the user,
wherein the training module (8) during an application phase of the reference model (10; M) for checking a comparison vector (16) adds a further model node (P, P0-P4) to the reference model (10; M) when the comparison vector (16) lies outside the acceptance range (A) of the reference model (10; M) and it is certain that the comparison vector (16) actually comes from the user, wherein
- the training module (8) is set up to piecewise define the reference model (10; M) by local models (L0-L3) each having a validity range (G0-G3), to form a local model (L0-L3) by at least one model node (P, P0-P4), and to store the local models (L0-L3) in the memory (4, 5), and the training module (8) is set up to assign to a local model (L0-L3) a validity range (G0-G3) which is determined by a probability distribution (W0-W2) which is assigned to the at least one model node (P, P0-P4) forming the local model (L0-L3), and to fix the width of the probability distribution (W0-W2) of the model node (P, P0-P4) in dependence on the probability distributions (W0-W2) of neighboring model nodes (P, P0-P4); and
- the recognition module (9) is set up to use that local model (L0-L3) of the reference model (10; M) in whose validity range (G0-G3) a biometric comparison vector (16) of the user received via the communication interface (6) lies, and the recognition module (9) is set up to ascertain from the probability distribution (W0-W2) assigned to a model node (P, P0-P4) a recognition quality (19) of a biometric comparison vector (16) received via the communication interface (6) and accepted as coming from the user which lies within the validity range (G0-G3) of that local model (L0-L3) which is formed by at least the model node (P, P0-P4).

7. The data carrier (1) according to claim 6, **characterized in that**
- the training module (8) is set up to assign a tolerance range (T0-T3) to each local model (L0-L3) and to form the acceptance range (A) of the reference model (10; M) from the tolerance ranges (T0-T3) of all local models (L0-L3), and
- the recognition module (9) is set up to accept as coming from the user a biometric comparison vector (16), received via the communication interface (9), which lies within the tolerance range (T0-T3) of a local model (L0-L3).

8. The data carrier (1) according to claim 6, **characterized in that** the training module (8) is set up such that upon addition of a model node (P, P0-P4) to the reference model (10; M) it adjusts to each other the widths of the probability distribution (W0-W2) of the model node (P, P0-P4) and of the probability distributions (W0-W2) of neighboring model nodes (P, P0-P4).

9. The data carrier (1) according to any of claims 6 to 8, **characterized in that** the training module (8) is set up to not add a further model node (P, P0-P4) to the local model (L0-L3) and/ or to split the local model (L0-L3) into two new local models (L0-L3), and to store them in the memory (4, 5), when the number of model nodes (P, P0-P4) forming a local model (L0-L3) exceeds a predetermined maximum number stored in the memory (4, 5).

10. The data carrier (1) according to any of claims 6 to 9, **characterized in that** the training module (8) is set up to store in the memory (4, 5), as a model node (P, P0-P4) to be added to the reference model (10; M), the associated biometric reference vector (17; N) of the user as a new model node (P, P0-P4) .

11. The data carrier (1) according to any of claims 6 to 10, **characterized in that**
- the recognition module (9) is set up to carry out a recognition of a biometric comparison vector (16) by matching the comparison vector (16) with a reference model (10; M) of the user stored in the memory (4, 5); and
- the training module (8) is set up to generate the reference model (10; M) within the framework of an initial training phase of the recognition module (9) from a plurality of reference vectors (17; N) received via the communication interface (6) and to store it in the memory (4, 5).

12. The data carrier (1) according to any of claims 6 to 12, **characterized in that**
- the recognition module (9) is set up to carry out a recognition of a biometric comparison vector (16) by matching the comparison vector (16) with an adaptive reference model (10; M) of the user stored in the memory (4, 5); and
- the training module (8) is set up to continuously adjust the reference model (10; M) within the framework of an application phase of the recognition module (9) with biometric reference vectors (17; N) received via the communication interface (6) and to store it in the memory (4, 5).

13. The data carrier (1) according to any of claims 6 to 12, **characterized in that** the training module (8) is set up such that upon addition of a model node (P, P0-P4) to the reference model (10; M) it gets information from the recognition module (9) that the associated reference vector (17; N) lies outside the acceptance range (A) of the reference model (10; M), and receives information from an authorized body (12) via the communication interface (6) that the associated reference vector (17; N) comes from the user.

## Revendications

1. Procédé d'élaboration d'un modèle de référence (10 ; M) avec une plage d'acceptation (A) sur un support de données portable (1) pour la reconnaissance biométrique d'un utilisateur du support de données (1), un vecteur biométrique de comparaison (16) situé à l'intérieur de la plage d'acceptation (A) du modèle de référence (10 ; M) étant accepté comme provenant de l'utilisateur, ledit procédé comprenant les étapes suivantes :
définition du modèle de référence (10 ; M) par des points d'appui de modèle (P, P0-P4), qui sont formés à partir de vecteurs biométriques de référence (17 ; N) respectifs provenant de l'utilisateur pendant une phase d'entraînement initiale, une pluralité de vecteurs biométriques de référence (17 ; N) étant enregistrés pour générer le modèle de référence (10 ; M), et le modèle de référence (10 ; M) étant défini partie par partie au moyen de modèles locaux (L0-L3) ayant chacun un champ de validité (G0-G3), et insertion d'un point d'appui de modèle (P, P0-P4) dans le modèle de référence (10 ; M) pendant une phase d'application du modèle de référence (10 ; M) lors de l'examen d'un vecteur de comparaison (16), si le vecteur de comparaison (16) est situé à l'extérieur de la plage d'acceptation (A) du modèle de référence (10 ; M) et s'il est constaté que le vecteur de comparaison (16) provient effectivement de l'utilisateur,
un modèle local (L0-L3) étant formé par au moins un point d'appui de modèle (P, P0-P4), le modèle local (L0-L3) du modèle de référence (10 ; M) dans le champ de validité (G0-G3) duquel est situé un vecteur biométrique de comparaison (16) de l'utilisateur étant utilisé pour la reconnaissance de l'utilisateur, une plage de tolérance (G0-G3) respective étant affectée à chaque modèle local (L0-L3), laquelle est définie par une distribution de probabilité (W0-W2) affectée au point ou aux points d'appui de modèle (P, P0-P4) qui forment le modèle local (L0-L3), la largeur de la distribution de probabilité (W0-W2) du point d'appui de modèle (P, P0-P4) résultant des distributions de probabilité (W0-W2) de points d'appui de modèle (P, P0-P4) contigus, et la distribution de probabilité (W0-W2) correspondant à un point d'appui de modèle (P, P0-P4) indiquant une qualité de reconnaissance (19) d'un vecteur biométrique de comparaison (16) accepté comme provenant de l'utilisateur et situé à l'intérieur du champ de validité (G0-G3) du modèle local (L0-L3) formé par le ou les points d'appui de modèle (P, P0-P4).

2. Procédé selon la revendication 1, **caractérisé en ce qu'**à chaque modèle local (L0-L3) est affectée une plage de tolérance (T0-T3) respective, les plages de tolérance (T0-T3) de tous les modèles locaux (L0-L3) formant la plage d'acceptation (A) du modèle de référence (10 ; M), et **en ce qu'**un vecteur biométrique de comparaison (16) situé dans la plage de tolérance (T0-T3) d'un modèle local (L0-L3) est accepté comme provenant de l'utilisateur.

3. Procédé selon la revendication 1, **caractérisé en ce que** lors de l'insertion d'un point d'appui de modèle (P, P0-P4) dans le modèle de référence (10 ; M), les largeurs de la distribution de probabilité (W0-W2) du point d'appui de modèle (P, P0-P4) et des distributions de probabilité (W0-W2) de points d'appui de modèle (P, P0-P4) contigus sont ajustées entre elles.

4. Procédé selon l'une des revendications 1 à 3, **caractérisé en ce que**, lorsque le nombre des points d'appui de modèle (P, P0-P4) formant un modèle local (L0-L3) dépasse un nombre maximal défini, un autre point d'appui de modèle (P, P0-P4) ne sera pas inséré dans le modèle local (L0-L3), et/ou le modèle local (L0-L3) sera divisé en deux nouveaux modèles locaux (L0-L3).

5. Procédé selon l'une des revendications 1 à 4, **caractérisé en ce qu'**une décision sur le fait si un vecteur biométrique de comparaison (16) est un vecteur biométrique de référence (17 ; N) provenant de l'utilisateur, est prise par une instance (12) autorisée extérieure au support de données (1).

6. Support de données portable (1), comprenant une mémoire (4, 5), une interface de communication (6), un processeur (2) et un module de détection (9) et un module d'entraînement (8) respectivement exécutables par le processeur (2), le module d'entraînement (8) étant prévu pour élaborer dans la mémoire (4, 5) un modèle de référence (10 ; M) avec une plage d'acceptation (A) pour la reconnaissance biométrique d'un utilisateur du support de données (1) par le module de détection (9), un vecteur biométrique de comparaison (16) situé à l'intérieur de la plage d'acceptation (A) du modèle de référence (10 ; M) étant accepté par le module de détection (9) comme provenant de l'utilisateur, le module d'entraînement (8) étant prévu pour définir pendant une phase d'entraînement initiale le modèle de référence (10 ; M) par des points d'appui de modèle (P, P0-P4), une pluralité de vecteurs biométriques de référence (17 ; N) étant enregistrés pour générer le modèle de référence (10 ; M), lesquels sont respectivement formés à partir de vecteurs biométriques de référence (17 ; N) reçus via l'interface de communication (6) et provenant de l'utilisateur,
le module d'entraînement (8) insérant un point d'appui de modèle (P, P0-P4) dans le modèle de référence (10 ; M) pendant une phase d'application du modèle de référence (10 ; M) pour l'examen d'un vecteur de comparaison (16), si le vecteur de référence (16) correspondant est situé à l'extérieur de la plage d'acceptation (A) du modèle de référence (10 ; M) et s'il est constaté que le vecteur de comparaison (16) provient effectivement de l'utilisateur, où
- le module d'entraînement (8) est prévu pour définir partie par partie le modèle de référence (10 ; M) au moyen de modèles locaux (L0-L3) ayant chacun un champ de validité (G0-G3), pour former un modèle local (L0-L3) par au moins un point d'appui de modèle (P, P0-P4) et pour archiver les modèles locaux (L0-L3) dans la mémoire (4, 5), et où le module d'entraînement (8) est prévu pour affecter à un modèle local (L0-L3) un champ de validité (G0-G3) défini par une distribution de probabilité (W0-W2) affectée au point ou aux points d'appui de modèle (P, P0-P4) qui forment le modèle local (L0-L3), et pour fixer la largeur de la distribution de probabilité (W0-W2) du point d'appui de modèle (P, P0-P4) en fonction des distributions de probabilité (W0-W2) de points d'appui de modèle (P, P0-P4) contigus ; et où
- le module de détection (9) est prévu pour utiliser le modèle local (L0-L3) du modèle de référence (10 ; M) dans le champ de validité (G0-G3) duquel est situé un vecteur biométrique de comparaison (16) de l'utilisateur reçu via l'interface de communication (6), et où le module de détection (9) est prévu pour déterminer à partir de la distribution de probabilité (W0-W2) correspondant à un point d'appui de modèle (P, P0-P4) une qualité de reconnaissance (19) d'un vecteur biométrique de comparaison (16) reçu via l'interface de communication (6) et accepté comme provenant de l'utilisateur, et situé à l'intérieur du champ de validité (G0-G3) du modèle local (L0-L3) formé par le ou les points d'appui de modèle (P, P0-P4).

7. Support de données (1) selon la revendication 6, **caractérisé en ce que**
- le module d'entraînement (8) est prévu pour affecter une plage de tolérance (T0-T3) à chaque modèle local (L0-L3) et pour former la plage d'acceptation (A) du modèle de référence (10 ; M) à partir des plages de tolérance (T0-T3) de tous les modèles locaux (L0-L3), et **en ce que**
- le module de détection (9) est prévu pour accepter comme provenant de l'utilisateur un vecteur biométrique de comparaison (16) reçu via l'interface de communication (9) et situé à l'intérieur de la plage de tolérance (T0-T3) d'un modèle local (L0-L3).

8. Support de données (1) selon la revendication 6, **caractérisé en ce que** le module d'entraînement (8) est prévu pour ajuster entre elles les largeurs de la distribution de probabilité (W0-W2) du point d'appui de modèle (P, P0-P4) et des distributions de probabilité (W0-W2) de points d'appui de modèle (P, P0-P4) contigus lors de l'insertion d'un point d'appui de modèle (P, P0-P4) dans le modèle de référence (10 ; M).

9. Support de données (1) selon l'une des revendications 6 à 8, **caractérisé en ce que** le module d'entraînement (8) est prévu pour ne pas insérer un autre point d'appui de modèle (P, P0-P4) dans le modèle local (L0-L3) et/ou pour diviser le modèle local (L0-L3) en deux nouveaux modèles locaux (L0-L3) et archiver ceux-ci dans la mémoire (4, 5), lorsque le nombre des points d'appui de modèle (P, P0-P4) formant un modèle local (L0-L3) dépasse un nombre maximal défini archivé en mémoire (4, 5).

10. Support de données (1) selon l'une des revendications 6 à 9, **caractérisé en ce que** le module d'entraînement (8) est prévu pour archiver en mémoire (4, 5), comme point d'appui de modèle (P, P0-P4) à insérer dans le modèle de référence (10 ; M), le vecteur biométrique de référence (17 ; N) de l'utilisateur en tant que nouveau point d'appui de modèle (P, P0-P4).

11. Support de données (1) selon l'une des revendications 6 à 10, **caractérisé en ce que**
- le module de détection (9) est prévu pour exécuter une reconnaissance d'un vecteur biométrique de comparaison (16) par recherche de concordance entre le vecteur de comparaison (16) et un modèle de référence (10 ; M) de l'utilisateur archivé dans la mémoire (4, 5) ; et **en ce que**
- le module d'entraînement (8) est prévu pour générer le modèle de référence (10 ; M) à partir de plusieurs vecteurs de référence (17 ; N) reçus via l'interface de communication (6) et pour archiver celui-ci en mémoire (4, 5), dans le cadre d'une phase d'entraînement initiale du module de détection (9).

12. Support de données (1) selon l'une des revendications 6 à 12, **caractérisé en ce que**
- le module de détection (9) est prévu pour exécuter une reconnaissance d'un vecteur biométrique de comparaison (16) par recherche de concordance entre le vecteur de comparaison (16) et un modèle de référence adaptatif (10 ; M) de l'utilisateur archivé dans la mémoire (4, 5) ; et **en ce que**
- le module d'entraînement (8) est prévu pour ajuster de manière continue le modèle de référence (10 ; M) avec les vecteurs biométriques de référence (17 ; N) reçus via l'interface de communication (6) et pour archiver celui-ci en mémoire (4, 5), dans le cadre d'une phase d'application du module de détection (9).

13. Support de données (1) selon l'une des revendications 6 à 12, **caractérisé en ce que** le module d'entraînement (8) est prévu pour obtenir du module de détection (9), lors de l'insertion d'un point d'appui de modèle (P, P0-P4) dans le modèle de référence (10 ; M), une information relative à la situation du vecteur de référence (17 ; N) à l'extérieur de la plage d'acceptation (A) du modèle de référence (10 ; M), et à recevoir d'une instance (12) autorisée via l'interface de communication (6) une information sur le fait que le vecteur de référence (17 ; N) correspondant provient de l'utilisateur.
